Europäisches Patentamt

European Patent Office

Office européen des brevets

(19)

(11) Veröffentlichungsnummer: **0 007 530**
**A1**

(12)

# EUROPÄISCHE PATENTANMELDUNG

(21) Anmeldenummer: **79102425.0**

(22) Anmeldetag: **13.07.79**

(51) Int. Cl.³: **F 24 J 3/00**
**F 25 D 3/00**

(30) Priorität: **20.07.78 AT 5255/78**

(43) Veröffentlichungstag der Anmeldung:
**06.02.80 Patentblatt 80/3**

(84) Benannte Vertragsstaaten:
**BE CH DE FR GB IT NL SE**

(71) Anmelder: **Holztrattner, Heinrich**
**Puch 453**
**A-5412 Puch(AT)**

(72) Erfinder: **Holztrattner, Heinrich**
**Puch 453**
**A-5412 Puch(AT)**

(54) **Geschlossener Behälter zur Speicherung und/oder Erzeugung von Wärme oder Kälte mit eingebauten Kammern und Rohren.**

(57) In einem geschlossenen Behälter (1) mit eingebauten Kammern (7.u.9) und Rohren (8) wird zur Speicherung und-/oder Erzeugung von Wärme oder Kälte, ein Speichermedium (5) eingebracht. Die Ausdehnungskörper (6) nehmen die Volumsänderungen des Speichermediums (5) beim Erwärmen bzw. Abkühlen auf. Durch den Einbau dieser Ausdehnungskörper (6) wird das Speicher-medium (5) von der Luft getrennt und es erübrigen sich getrennt stehende Ausdehnungsbehälter mit den zu ihnen führenden Leitungen.

EP 0 007 530 A1

./...

SCHNITT CD

SCHNITT AB

Holzdrattner Heinrich
A-5412 Puch 453

Die Erfindung betrifft einen geschlossenen Behälter zur
Speicherung und/oder Erzeugung von Wärme oder Kälte mit eingebauten Kammern und Rohren zur Trennung des Wärme- oder Kältespeichermediums vom Wärme- oder Kältetransportmittel.

Behälter zur Speicherung von Wärme oder Kälte sind in den
verschiedensten Ausführungen bereits bekannt. Gemeinsam ist
jedoch allen, daß die sich bildenden Drücke dadurch abgebaut
werden, daß sie über Standrohre oder Be- und Entlüftungsventile mit der Atmosphäre in Verbindung stehen oder an ein,
außerhalb des Speichers liegendes Ausdehnungsgefäß angeschlossen sind.

Die Erfindung hat sich nun zur Aufgabe gestellt, im Wärme-
oder Kältespeichermedium Ausdehnungskörper anzuordnen, die
die Volumsänderungen des Wärme- oder Kältespeichermediums im
Behälter aufnehmen.

Im Behälter, der das Speichermedium enthält, sind ein oder
mehrere Ausdehnungskörper angeordnet. Diese Ausdehnungskörper

0007530

-2-

bewirken nun, daß der Druck beim Erwärmen nicht wesentlich
zunimmt bzw. beim Abkühlen kein Unterdruck entsteht. Da das
Speichermedium von der Atmosphäre dicht abgeschlossen ist,
besteht nicht mehr die Gefahr einer vorzeitigen Zersetzung
oder Alterung bzw. Erhöhung der Aggressivität durch Sauerstoffzufuhr. Dadurch, daß die Ausdehnungskörper im Speichermedium
eingebaut sind, ist auch kein zusätzlicher Wärme- bzw. Kälteverlust möglich und der Raumbedarf ist geringer, da keine Verbindungsleitungen notwendig sind. Es wird außerdem möglichst
ein Speichermedium, das beim Erwärmen bzw. Abkühlen den
Aggregatzustand ändert, verwendet. Die Änderung des Aggregatzustandes des Speichermediums wird angestrebt, da dadurch die
Schmelz- bzw. Verdampfungswärme genutzt werden kann, und damit die Behälter wesentlich größere Wärme- bzw. Kältemengen,
bei vergleichbarem Volumen, speichern können.

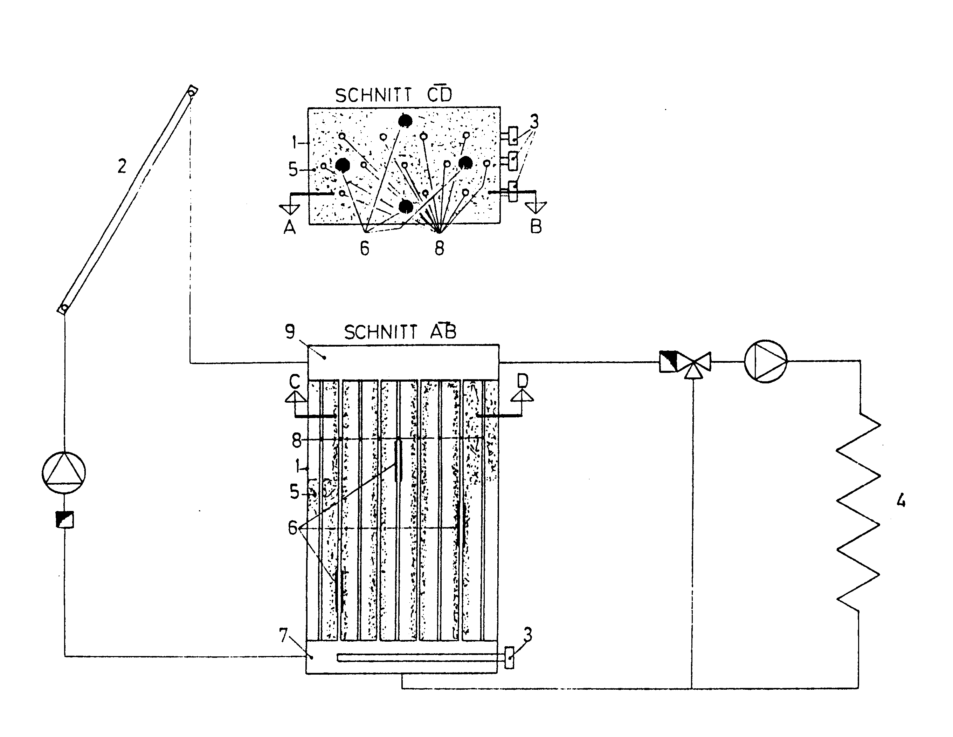

Nachstehend wird nun die Erfindung an Hand der Zeichnung,
die schematisch eine Solaranlage mit Fußbodenheizung zeigt,
beschrieben.

Das Speichermedium 5 im Behälter 1 wird durch die Solarzelle 2
oder das Elektroheizregister 3 aufgeheizt. Die Wärme wird
beispielsweise für eine Fußbodenheizung 4 verwendet. Die im
Speichermedium 5 liegenden Ausdehnungskörper 6 ermöglichen bei
der Erwärmung die Ausdehnung des Speichermediums 5 (z.B.

BAD ORIGINAL

Paraffin). Im angeführten Beispiel erfolgt die Erwärmung
des Speichermediums 5 indirekt durch ein mit Frostschutz versehenes, in der Solarzelle 2 oder durch das Elektroheizregister 3, aufgewärmtes Wasser, das von der Rücklaufkammer 7
durch die Rohre 8 in die Vorlaufkammer 9 fließt. Durch die
Verwendung eines Speichermediums (z.B.Paraffin) das bei der
Erwärmung bzw. Abkühlung den Aggregatzustand ändert, kann der
Behälter 1 wesentlich mehr Wärme bzw. Kälte speichern.

Puch, am 1o. Juli 1979

Holztrattner Heinrich
A-5412 Puch 453


Patentanspruch


Geschlossener Behälter zur Speicherung und/oder Erzeugung
von Wärme oder Kälte mit eingebauten Kammern und Rohren zur
Trennung des Wärme- und Kältespeichermediums vom Wärme- oder
Kältetransportmittel d a d u r c h  g e k e n n z e i c h n e
daß im Wärme- oder Kältespeichermedium (5) Ausdehnungskörper (6
angeordnet sind, die die Volumsänderungen des Wärme- oder
Kältespeichermediums (5) im Behälter (1) aufnehmen.


Puch, am 1o. Juli 1979

SCHNITT CD

SCHNITT AB

**Europäisches Patentamt**

# EUROPÄISCHER RECHERCHENBERICHT

Nummer der Anmeldung

EP 79 10 2425

## EINSCHLÄGIGE DOKUMENTE

KLASSIFIKATION DER
ANMELDUNG (Int.Cl. 3)

| Kategorie | Kennzeichnung des Dokuments mit Angabe, soweit erforderlich, der maßgeblichen Teile | betrifft Anspruch |
|---|---|---|
| X | US - A - 1·834 009 (TILLINGHAST) <br> * Vollständig * <br><br> -- | Einzige |
| A | FR - A - 2 370 236 (UNITED KINGDOM) | |
| A | DE - A - 2 551 379 (WERDING) <br><br> ---- | |

F 24 J 3/00
F 25 D 3/00

RECHERCHIERTE
SACHGEBIETE (Int. Cl. 3)

F 24 J
F 24 D
F 25 D

KATEGORIE DER
GENANNTEN DOKUMENTE

X: von besonderer Bedeutung

A: technologischer Hintergrund

O: nichtschriftliche Offenbarung

P: Zwischenliteratur

T: der Erfindung zugrunde
liegende Theorien oder
Grundsätze

E: kollidierende Anmeldung

D: in der Anmeldung angeführtes
Dokument

L: aus andern Grunden
angeführtes Dokument

&: Mitglied der gleichen Patentfamilie, übereinstimmendes
Dokument

Der vorliegende Recherchenbericht wurde für alle Patentansprüche erstellt.

| Recherchenort | Abschlußdatum der Recherche | Prüfer |
|---|---|---|
| Der Haag | 22-10-1979 | CRAb |

EPA form 1503.1  06.78